# EUROPÄISCHE PATENTSCHRIFT

(11) **EP 2 325 632 B1**
(45) Veröffentlichungstag und Bekanntmachung des Hinweises auf die Patenterteilung: **16.07.2014**
(21) Anmeldenummer: 10012676.2
(22) Anmeldetag: 01.10.2010
(51) Int. Cl.: G01N 31/12

(54) **Verfahren zur Sauerstoffelementaranalyse und zur Sauerstoffisotopenmessung stickstoffhaltiger, organischer Substanzen**
Method for oxygen element analysis and oxygen isotope measurement of organic substances containing nitrogen
Procédé d'analyse d'élément d'oxygène et de mesure d'isotopes d'oxygène de substances organiques contenant de l'azote

(30) Priorität: 23.11.2009 DE 102009054151
(43) Veröffentlichungstag der Anmeldung: 25.05.2011
(73) Patentinhaber: Elementar Analysensysteme GmbH, 63452 Hanau (DE)
(72) Erfinder: Kupka, hans-Joachim, 63543 Neuberg (DE); Lange, Lutz, 60599 Frankfurt am Main (DE); Sieper, Hans-Peter, 63471 Gelnhausen (DE); Volders, Filip, 2300 Turnhout (BE); Schmidt, Hanns-Ludwig, 84036 Landshut (DE); Tanz, Nicole, 85221 Dachau (DE); Roßmann, Andreas, 85301 Schweitenkirchen (DE)
(74) Vertreter: Grimm, Ekkehard

(56) Entgegenhaltungen:
- EP-A1- 2 031 387
- J. K. BÖHLKE ET AL: "Oxygen isotopes in nitrate: new reference materials for 18O:17O:16O measurements and observations on nitrate-water equilibration", RAPID COMMUNICATIONS IN MASS SPECTROMETRY, Bd. 17, Nr. 16, 30. August 2003 (2003-08-30), Seiten 1835-1846, XP55083188, ISSN: 0951-4198, DOI: 10.1002/rcm.1123

## Beschreibung

Die vorliegende Erfindung betrifft ein Verfahren zur Sauerstoffisotopenmessung organischer, insbesondere stickstoffhaltiger, Substanzen, bei dem eine Probe in einem Probenrohr pyrolisiert wird, der enthaltene Sauerstoff zu Kohlenmonoxid (CO) umgesetzt wird, das Kohlenmonoxid (CO) in einer CO-Adsorptionssäule gesammelt wird und der Gasstrom einem Isotopenmassenspektrometer (IRMS) zugeführt wird.

Bei der Sauerstoffisotopenmessung stickstoffhaltiger, organischer Substanzen liegt ein Problem darin, dass die Massen von N₂ und CO jeweils 28 (N₂ ^ 28; CO ^ 28) betragen. Daher müssen Maßnahmen zur 100%igen Bildung von CO und Trennung bzw. Unterdrückung von N₂ getroffen werden. Wenn eine solche Messung zu brauchbaren Ergebnissen führen soll, müssen Temperaturen von > 1400 °C im Pyrolyserohr erreicht werden, wobei auch die hohen Temperaturen bei einigen stickstoffhaltigen, organischen Verbindungen auch nicht zum Erfolg führen.

Üblicherweise werden stickstoffhaltige, organische Substanzen einer Sauerstoffelementaranalyse und einer Sauerstoffisotopenmessung mittels einer Vorrichtung unterworfen, die ein Pyrolyserohr aus zum Beispiel Glassy-Carbon mit einem das Pyrolyserohr mit Abstand umhüllenden Keramikrohr aufweist. In dem Pyrolyserohr befindet sich ein Einsatz aus Glassy-Carbon (Glaskohlenstoff) mit einer sich daran anschließenden Füllung aus massiven Glassy-Carbon-Splittern mit einer Größe von 1-2 mm. Zur quantitativen Bildung von CO werden Temperaturen benötigt, die größer als 1400 °C sind, was zur Folge hat, dass diese speziellen, kostenaufwendigen Öfen verwendet werden müssen, da die üblichen Öfen aufgrund metallischer Heizleiter, die üblicherweise aus Eisen-Aluminium-Legierungen bestehen, nur für Temperaturen von bis zu 1350 ― 1400 °C geeignet sind. Nach der Pyrolyse werden CO und N₂ mittels eines chromatischen Trennverfahrens getrennt.

Eine solche Verfahrensweise ist in der DE 10 2008 008 288 A1 beschrieben. Diese Druckschrift beschreibt auch ein Verfahren, bei dem zu der Probe eine wasserstoffhaltige Substanz in einer Menge hinzugefügt wird, die mindestens der zweifachen Menge der Probe entspricht, und bei dem in dem Pyrolyserohr die Pyrolyseprodukte durch eine Reaktionszone aus Gasruß geführt werden. Als wasserstoffhaltige Substanz wird vorzugsweise Polyethylen eingesetzt, das einen Wasserstoffgehalt von ca. 15% aufweist. Durch diese Verfahrensweise kann die Umsetzung von Sauerstoff zu CO bei niedrigen Temperaturen kleiner 1200 °C unter Verwendung einer kostengünstigen Quarzglasapparatur erfolgen.

Es wurden umfangreiche Studien vorgenommen, um mögliche Reaktionen und die Bildung möglicher Produkte durch die Pyrolyse von O und N enthaltenden Verbindungen und deren potenzielle Umwandlung zu sekundären Produkten und Polymeren sowie den Einfluss von diesen auf Polyethylen (PE) zu untersuchen. Mögliche Reaktionsabläufe sind in den Übersichtsschemen 1 bis 4 zusammengestellt, die Teil der beigefügten Zeichnungen sind.

Diese Übersichtsschemen 1 bis 4 zeigen:
- Schema 1:: Bildung von primären Produkten (nicht-stöchiometrisch)
- Schema 2:: Bildung von sekundären Produkten
- Schema 3:: Polymerisation von sekundären Produkten und Depolymerisation
- Schema 4:: Wechselwirkung von Polyethylen (PE); mögliche Reaktionen.

An den Reaktionsabläufen, wie sie im Schema 3 aufgeführt sind, sind die jeweiligen schädlichen "Reste" ersichtlich.

Anhand der auftretenden Reaktionen ist erkennbar, dass gebundener Sauerstoff direkt oder indirekt in CO umgewandelt wird und dass das Polymer nur Kohlenstoff und Stickstoff enthält.

Schema 4 zeigt mögliche Reaktionen und Einflüsse durch gleichzeitige Pyrolyse von Polyethylen (PE) als ein Additiv.

Die Schemen zeigen auch, dass die Verbindungen frei von Sauerstoff und Stickstoff sein sollten. Es ergeben sich Radikale durch thermische Fragmentation und dies liefert Wasserstoff. Es ist auch anzunehmen, dass diese Produkte mit Fragmenten des Analyts reagieren und die Bildung von N und O enthaltenden Zwischenprodukten modifizieren sowie die Bildung von CO unterstützen.

Die Additive, die überprüft wurden, waren langkettige Kohlenwasserstoffe, Polypropylen und einige Polyethylen-Proben. Polyethylen erwies sich als das geeignetste und vielversprechende Additiv. Allerdings zeigt sich, dass keine der getesteten Proben frei von Sauerstoff war. Aus praktischen Gründen wurde ein kommerziell erhältliches Produkt verwendet. Es sollte hervorgehoben werden, dass die Verbindung HCNO/HOCN in HCN umwandeln sollte, Cyan zu HNC und N₂ zu NH₃ reduzieren sollte.

Es ist darauf hinzuweisen, dass die Schemen 1 bis 4 unmittelbar Bestandteil der Beschreibung mit ihrem entsprechenden Offenbarungsgehalt sind, auch wenn die Reaktionsabläufe nicht detailliert mit Worten beschrieben sind.

Der vorliegenden Erfindung liegt nun die Aufgabe zugrunde, ein Verfahren zur Sauerstoffelementaranalyse und zur Sauerstoffisotopenmessung stickstoffhaltiger, organischer Substanzen zu schaffen, mit dem es möglich ist, die Umsetzung von Sauerstoff zu CO bei niedrigen Temperaturen ab 1100 °C Pyrolysetemperatur unter Verwendung einer kostengünstigen Quarzglasapparatur durchzuführen. Weiterhin soll die Erfindung auch zur Verbesserung der Sauerstoffisotopenanalyse bei > 1400 °C für stickstoffhaltige Substanzen geeignet sein.

Gelöst wird diese Aufgabe durch ein Verfahren zur Sauerstoffisotopenmessung organischer, insbesondere stickstoffhaltiger, Substanzen, bei dem eine Probe in einem Probenrohr pyrolisiert wird, der enthaltene Sauerstoff zu Kohlenmonoxid (CO) umgesetzt wird, das Kohlenmonoxid (CO) in einer CO-Adsorptionssäule gesammelt wird und der Gasstrom einem Isotopenmassenspektrometer (IRMS) zugeführt wird, das dadurch gekennzeichnet ist, dass in einem weiteren Verfahrensschritt der Gasstrom aus dem Pyrolyserohr zwischen dem Pyrolyserohr und der CO-Adsorptionssäule unterbrochen wird und die Gase aus dem Pyrolyserohr zur Außenumgebung abgegeben werden, wobei der CO-Adsorptionssäule anstelle des Pyrolysegasstroms für mindestens 230 sec unmittelbar Helium zugeführt wird, um das Adsorptionsrohr von Fremdgasen und insbesondere von N₂ frei zu spülen, und dass in einem darauf folgenden Verfahrensschritt die CO-Adsorptionssäule aufgeheizt wird und in dem lsotopenmassenspektrometer das CO gemessen wird.

Erfindungsgemäß wird verhindert, dass N₂ und weitere Fremdgase in das Massenspektrometer eintreten, indem sie vor der CO-Falle abgeführt werden und indem die CO-Falle mit Helium vor der CO-Desorption gespült wird.

Weitere Einzelheiten und Merkmale der Erfindung ergeben sich aus der nachfolgenden Beschreibung eines Ausführungsbeispiels anhand der Zeichnung. In der Zeichnung zeigt

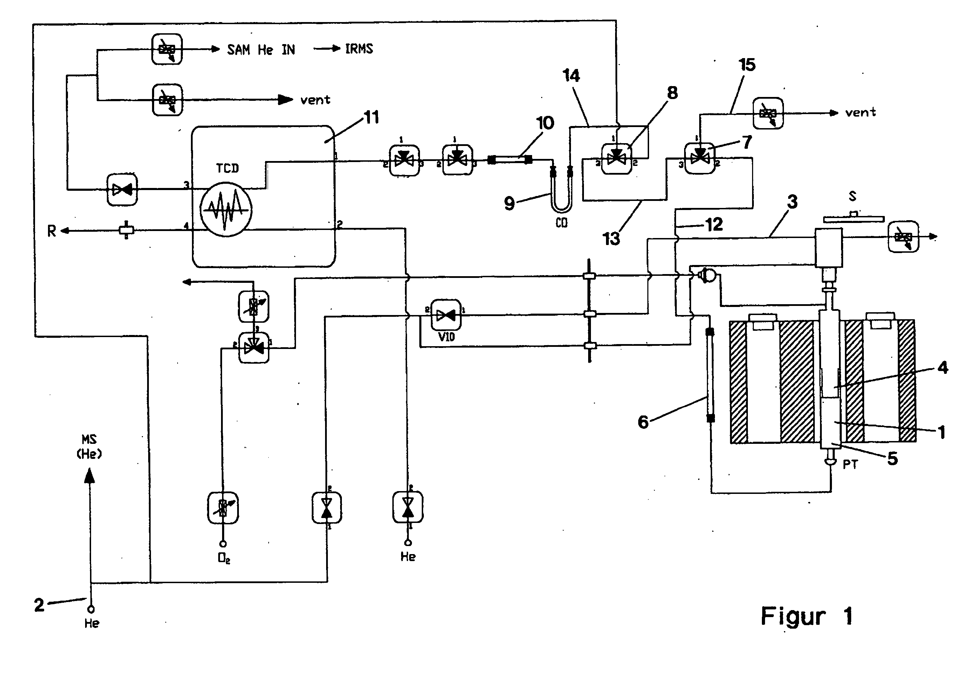

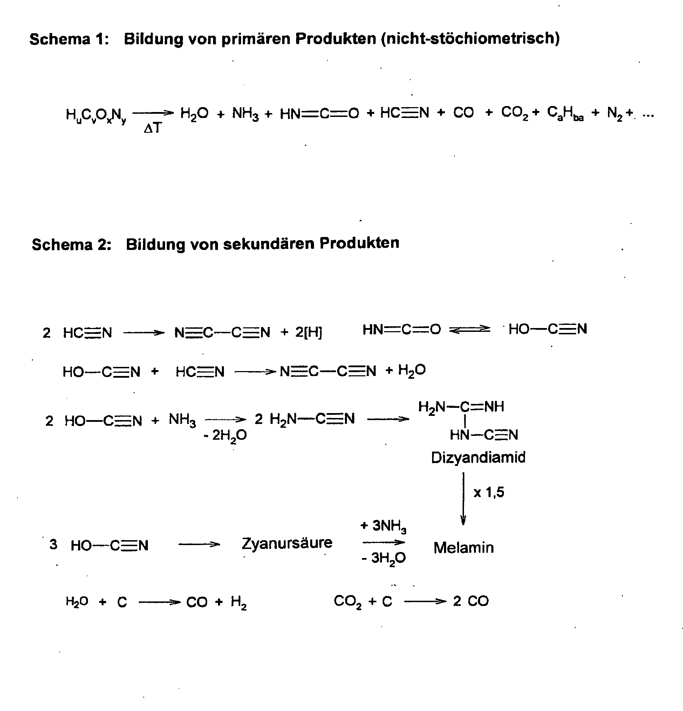

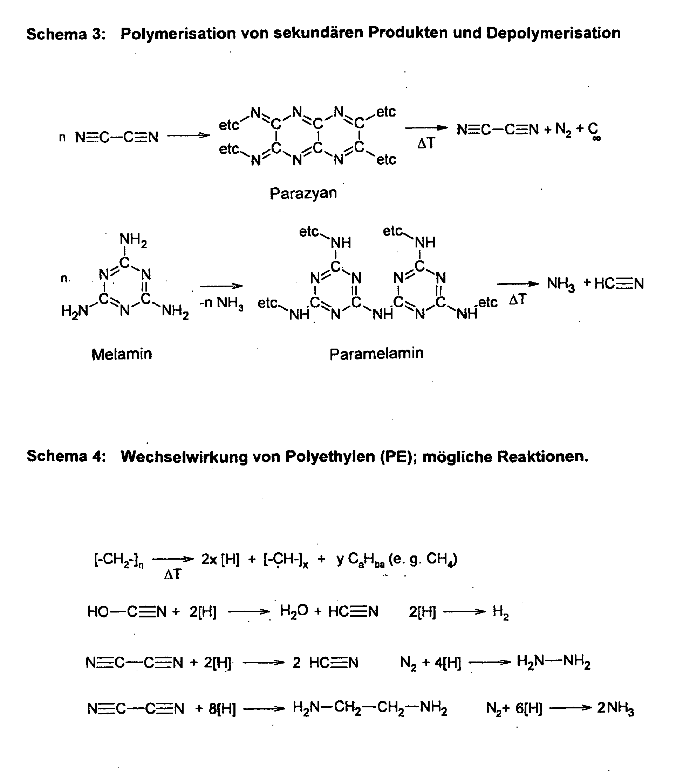

Figur 1 schematisch den Aufbau der erfindungsgemäßen Vorrichtung.

An die Figur 1 schließen sich Übersichtsschemen 1 bis 4 an, die zeigen:
- Schema 1:: Bildung von primären Produkten (nicht-stöchiometrisch)
- Schema 2:: Bildung von sekundären Produkten
- Schema 3:: Polymerisation von sekundären Produkten und Depolymerisation
- Schema 4:: Wechselwirkung von Polyethylen (PE); mögliche Reaktionen.

Die Vorrichtung, wie sie in Figur 1 schematisch dargestellt ist, ist unter anderem für die Sauerstoffisotopenmessung stickstoffhaltiger, organischer Substanzen ausgelegt.

In Figur 1 sind verschiedene Bauteile dargestellt und bezeichnet, wie beispielsweise Ventile, Trocknungseinrichtungen, Messeinrichtungen, usw., die für den Fachmann aufgrund der Schaltungssymbole erkennbar sind und deren Wirkungsweise sich unter anderem durch die jeweilige Leitungsführung ergibt, die aber hier nicht näher beschrieben werden, wenn sie für das erfindungsgemäße Verfahren nicht unbedingt erforderlich sind. Dennoch werden die sich für den Fachmann aus der Zeichnung ergebenden Vorrichtungsteile und Verfahrensabläufe in die Beschreibung einbezogen.

Die quantitative Umwandlung von organisch gebundenem Sauerstoff zu CO für die ¹⁸O-Analyse organischer Verbindungen wird allgemein durch eine Hochtemperaturpyrolyse bei ungefähr 1430 °C durchgeführt. Dieser Vorgang erfordert eine komplizierte und kostspielige Ausrüstung. Theoretisch sollte die Umwandlung bereits bei ungefähr 1120 °C möglich sein. Tatsächlich könnte sie unter Verwendung von Ruß anstelle von amorphem Kohlenstoff (glassy carbon) als Kohlenstoffkontakt durchgeführt werden. Allerdings führten Verbindungen, die N enthalten, zu nicht korrekten Ergebnissen der Isotopenanalyse, obwohl festgestellt wurde, dass auch bei diesem Vorgang gebundener Sauerstoff quantitativ zu CO umgewandelt wurde. Ursache hierfür ist das sehr langsame Ausspülen von N₂ aus dem Pyrolyserohr, was zu einer Überlagerung der Massen von N₂ und CO führt. Hierzu wird auf Schema 3 verwiesen. In Schema 3 sind exemplarisch Polymere dargestellt, die langsam Stickstoff freisetzen. Deshalb wurde die übliche GC-Separation von CO und N₂ durch die selektive, reversible Adsorption von CO ersetzt. Dies führt zu der Möglichkeit, die CO-Adsorptionssäule effektiv von Fremdgasen frei zu spülen.

Das Verfahren bzw. die Vorrichtung werden so betrieben, dass diese die Messung beeinflussenden Gase nicht oder zeitlich getrennt zu dem Massenspektrometer gelangen.

Das Verfahren ist auch zur Verbesserung der Sauerstoffisotopenanalyse bei > 1400 °C für stickstoffhaltige Substanzen geeignet.

Das in Figur 1 gezeigte Gerät entspricht in seinem Grundaufbau einem Mehrelemente-Isotopenverhältnis-Analysator. Die Vorrichtung umfasst ein Verbrennungsrohr 1, bei dem es sich um ein Pyrolyserohr aus Quarz für eine Pyrolyse bei z. B. 1170 °C (Niedertemperaturpyrolyse) handelt. Für eine Pyrolyse bei 1450 °C (HTP - High Temperature Pyrolysis) wird ein Verbrennungsrohr aus Glassy-Carbon verwendet.

In dem Verbrennungsrohr 1 befindet sich ein Tiegel 4, der die Probe aufnimmt. Es können sowohl feste als auch flüssige Substanzen analysiert werden. Unterhalb der Probe bzw. des Tiegels 4 ist in dem Bereich, der mit dem Bezugszeichen 5 bezeichnet ist, Gasruß eingefüllt, der eine sehr hohe Oberfläche aufweist. Dieser Gasruß dient zur Umsetzung des in der Probe enthaltenen Sauerstoffs zu CO während der Pyrolyse.

An das Verbrennungsrohr 1 schließt sich ein Absorptionsrohr 6 zur Absorption saurer und alkalischer Pyrolyseprodukte an, das über ein erstes Dreiwegeventil 7 und ein zweites Dreiwegeventil 8 mit einer CO-Adsorptionssäule 9 und einem weiteren Trocknungsrohr 10 verbunden ist. Diese Adsorptionseinrichtung 9 ist ihrerseits mit einem Isotopenmassenspektrometer (IRMS) 11 verbunden. Die Verbindungsleitung zwischen dem Absorptionsrohr 6 und dem ersten Dreiwegeventil 7 ist mit dem Bezugszeichen 12, die Verbindungsleitung zwischen dem ersten Dreiwegeventil 7 und dem zweiten Dreiwegeventil 8 ist mit dem Bezugszeichen 13 und die Verbindungsleitung zwischen dem zweiten Dreiwegeventil 8 und der CO-Adsorptionssäule 9 ist mit dem Bezugszeichen 14 bezeichnet.

Ein wesentlicher Bestandteil der erfindungsgemäßen Vorrichtung ist in den beiden Dreiwegeventilen 7 und 8 zu sehen. In dem Basis-Betriebsmodus sind das erste und zweite Dreiwegeventil 7 und 8 so eingestellt, dass sie das Absorptionsrohr 6 im Durchgang unmittelbar mit der CO-Adsorptionssäule 9 verbinden.

Das erste Dreiwegeventil 7 kann aber so eingestellt werden, dass die Verbindungsleitung 13 zu dem zweiten Dreiwegeventil 8 hin unterbrochen wird und die eingangsseitige Verbindungsleitung 12 des ersten Dreiwegeventils 7 mit einer Belüftungsleitung 15 verbunden wird, die zur Außenumgebung, gekennzeichnet durch die Angabe "vent", führt.

Das zweite Dreiwegeventil 8 kann so eingestellt werden, dass die Verbindungsleitung 13 zu dem ersten Dreiwegeventil 7 hin unterbrochen wird und eine Verbindung der Verbindungsleitung 14, die zu der CO-Adsorptionssäule 9 führt, mit einer He-Versorgungsleitung 16 verbunden wird, die ihrerseits mit der Heliumversorgung 2 in Verbindung steht.

Mit den zwei zusätzlichen Ventilen 7 und 8 ist ein Betriebsmodus der Vorrichtung möglich, der in drei Phasen unterteilt werden kann, die in ihrer Folge als Trap-Phase (Sammeln des CO), Purge-Phase (Freispülen der CO-Adsorptionssäule von störenden Begleitgasen (z. B. N₂) und Back-Flush-Phase (Rückspül-Phase ― Ausspülen des CO von der geheizten Adsorptionssäule mit Reinst-Helium) bezeichnet werden können.

### Trap-Phase:

In der Trap-Phase erfolgt die Pyrolyse der Probe in Helium. Während dieser Pyrolyse wird für eine Dauer von mindestens 300 Sekunden CO auf der CO-Adsorptionssäule 9 gesammelt. Gleichzeitig gelangen aber auch störende Fremdgase, wie beispielsweise N₂, in das Leitungssystem.

### Purge-Phase:

An die Trap-Phase schließt sich unmittelbar die Purge-Phase an, in der die Verbindung zwischen dem ersten Dreiwegeventil 7 und dem zweiten Dreiwegeventil 8 durch Umschalten beider Ventile unterbrochen wird. Mit diesem Umschalten des Dreiwegeventils 7 ist dann die Verbindungsleitung 12 mit der Belüftungsleitung 15 verbunden und mit dem Umschalten des Dreiwegeventils 8 ist die He-Versorgungsleitung 16 mit der Verbindungsleitung 14, die zu der CO-Adsorptionssäule 9 führt, verbunden. Durch dieses Umschalten der Ventile werden die Pyrolysegase vor dem Pyrolyserohr 1 über die Belüftungsleitung 15 an die Außenumgebung ("vent") abgegeben. Gleichzeitig wird der CO-Adsorptionssäule 9 unmittelbar Helium zugeführt, und zwar für mindestens 230 Sekunden. Durch diese Betriebsweise wird die CO-Adsorptionssäule 9 von zum Beispiel N₂ und Störgasen freigespült.

### Back-Flush-Phase:

In der Back-Flush-Phase, in der nach wie vor die Dreiwegeventile 7 und 8 so wie in der Purge-Phase geschaltet sind, wird die CO-Adsorptionssäule 9 aufgeheizt und das CO wird mit dem Reinst-Helium in das IRMS gespült.

In dem Isotopenmassenspektrometer (IRMS) 11 wird dann die Sauerstoffisotopenmessung von δ¹⁸O vorgenommen. Diese Phase dauert etwa 250 bis 300 Sekunden.

Nach dieser Back-Flush-Phase werden die beiden Dreiwegeventile 7 und 8 wieder so umgeschaltet, dass sie über die Verbindungsleitung 13 verbunden sind und gleichzeitig die Verbindung zu der Belüftungsleitung 15 sowie der He-Versorgungsleitung 16 unterbrochen wird. In diesem Betriebszustand kann die nächste Messung erfolgen, nachdem die Vorrichtung gespült ist, die dann mit der vorstehend beschriebenen Trap-Phase beginnt.

## Patentansprüche

1. Verfahren zur Sauerstoffisotopenmessung organischer, insbesondere stick-stoffhaltiger, Substanzen, bei dem eine Probe in einem Probenrohr (1) pyrolisiert wird, der enthaltene Sauerstoff zu Kohlenmonoxid (CO) umgesetzt wird, das Kohlenmonoxid (CO) in einer CO-Adsorptionssäule (9) gesammelt wird und der Gasstrom einem Isotopenmassenspektrometer (11) zugeführt wird, **dadurch gekennzeichnet, dass** in einem weiteren Verfahrensschritt der Gasstrom aus dem Pyrolyserohr (1) zwischen dem Pyrolyserohr (1) und der CO-Adsorptionssäule (9) unterbrochen wird und die Gase aus dem Pyrolyserohr (1) zur Außenumgebung abgegeben werden, wobei der CO-Adsorptionssäule (9) anstelle des Pyrolysegasstroms für mindestens 230 sec unmittelbar Helium zugeführt wird, um das Adsorptionsrohr von Fremdgasen und insbesondere von N₂ frei zu spülen, und dass in einem darauf folgenden Verfahrensschritt die CO-Adsorptionssäule (9) aufgeheizt wird und in dem Isotopenmassenspektrometer (11) das CO gemessen wird.

2. Verfahren nach Anspruch 1, **dadurch gekennzeichnet**, das das Kohlenmonoxid (CO) in der CO-Adsorptionssäule für mindestens 300 sec gesammelt wird.

3. Verfahren nach Anspruch 1 oder Anspruch 2, **dadurch gekennzeichnet, dass** die Pyrolyse bei einer Temperatur größer 1100 °C durchgeführt wird.

## Claims

1. A method for the oxygen isotope measurement of organic, particularly nitrogen-containing, substances, in which a sample is pyrolyzed in a sample tube (1), the contained oxygen is converted to carbon monoxide (CO), the carbon monoxide (CO) is collected in a CO adsorption column (9) and the gas stream is supplied to an isotope mass spectrometer (11), **characterized in that** in a further method step the gas stream from the pyrolysis tube (1) is interrupted between the pyrolysis tube (1) and the CO adsorption column (9), and the gases from the pyrolysis tube (1) are delivered to the external environment, wherein, instead of the pyrolysis gas stream, helium is directly supplied to the CO adsorption column (9) for at least 230 sec to rinse the adsorption tube free from foreign gases and particularly from N₂, and that in a subsequent method step the CO adsorption column (9) is heated and the CO is measured in the isotope mass spectrometer (11).

2. The method according to claim 1, **characterized in that** the carbon monoxide (CO) is collected in the CO adsorption column for at least 300 sec.

3. The method according to claim 1 or claim 2, **characterized in that** pyrolysis is carried out at a temperature of more than 1100°C.

## Revendications

1. Procédé pour la mesure isotopique de l'oxygène de substances organiques, en particulier contenant de l'azote, dans lequel un échantillon est pyrolysé dans un tube à échantillon (1), l'oxygène contenu est converti en monoxyde de carbone (CO), le monoxyde de carbone (CO) est recueilli dans une colonne d'adsorption de CO (9) et le courant gazeux est envoyé à un spectromètre de masse isotopique (11), **caractérisé en ce que**, dans une étape de procédé supplémentaire, le courant gazeux provenant du tube de pyrolyse (1) est interrompu entre le tube de pyrolyse (1) et la colonne d'adsorption de CO et les gaz provenant du tube de pyrolyse (1) sont évacués dans l'environnement extérieur, où de l'hélium est envoyé directement à la colonne d'adsorption de CO (9) à la place du courant de gaz de pyrolyse pendant au moins 230 secondes, pour débarrasser le tube d'adsorption des gaz étrangers et en particulier de N₂, et **en ce que**, dans une étape de procédé consécutive, la colonne d'adsorption de CO (9) est chauffée et le CO est mesuré dans le spectromètre de masse isotopique (11).

2. Procédé selon la revendication 1, **caractérisé en ce que** le monoxyde de carbone (CO) est recueilli dans la colonne d'adsorption de CO pendant au moins 300 secondes.

3. Procédé selon la revendication 1 ou la revendication 2, **caractérisé en ce que** la pyrolyse est réalisée à une température supérieure à 1100°C.
